# EUROPEAN PATENT APPLICATION

(11) **EP 1 400 973 A2**
(43) Date of publication of application: **24.03.2004**
(21) Application number: 03254948.7
(22) Date of filing: 08.08.2003
(51) Int. Cl.: G11B 20/12, H04N 7/52

(54) **Recording apparatus and method, recording medium, and program**

(30) Priority: 20.08.2002 JP 2002238802
(71) Applicant: SONY CORPORATION, Tokyo 141 (JP)
(72) Inventor: Uchiumi, Yoshihiro, c/o Sony Corporation, Tokyo 141 (JP); Mochizuki, Teruhiko, c/o Sony Corporation, Tokyo 141 (JP); Urushibara, Toshichika, c/o Sony Corporation, Tokyo 141 (JP)
(74) Representative: Turner, James Arthur

(57) **Abstract**

In a recording apparatus such as a video camera or a hard disk recorder, the amount of GOP data is adjusted. To an MPEG stream output from a video encoder/decoder, padding data is added by a buffer controller. Accordingly, each GOP is recorded with the beginning thereof coinciding with a cluster boundary.

## Description

The present invention relates to recording apparatuses and methods, recording media, and programs.

As a format for recording data on an information recording medium such as a hard disk or playing back data therefrom, the FAT (file allocation table) file system is known. The FAT file system is supported by default by personal computers with an OS (operating system) such as MS-DOS or Windows® installed thereon, so that it can be considered as the most commonly used file format system.

Thus, for example, if video and audio data captured by a video camera is recorded on an information recording medium based on the FAT file format, the data on the information recording medium can be played back or edited by a general-purpose computer without a special driver or the like installed thereon.

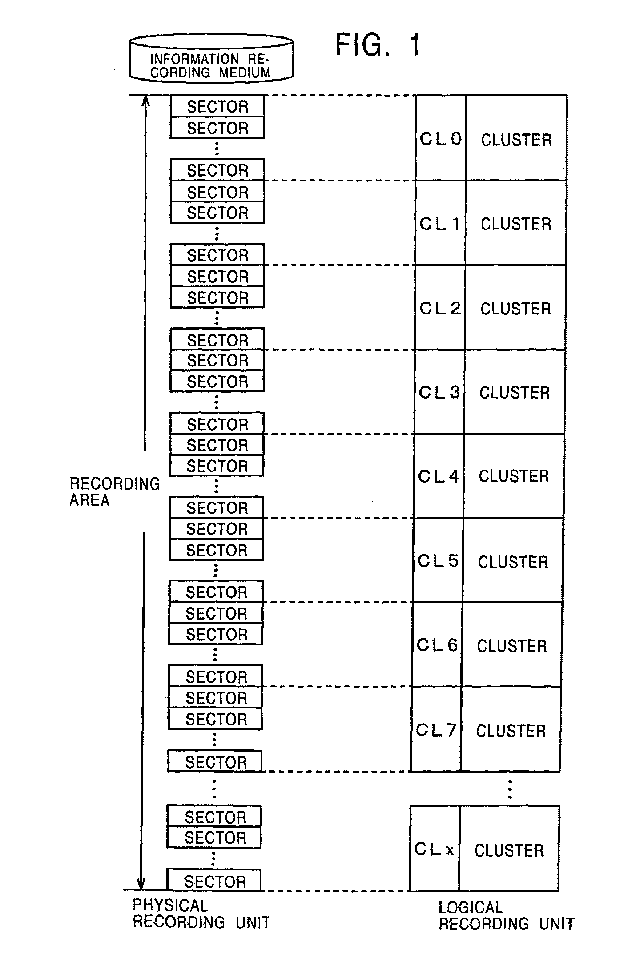

Now, the FAT file system will be described. As shown in Fig. 1, the recording area of an information recording medium that has been formatted based on the FAT file system is divided into physical recording units called sectors. Each of the sectors has a predetermined capacity (e.g., 512 bytes), and has a sector address assigned thereto. The information recording medium is accessed on a sector-by-sector basis.

Also, the recording area of the information recording medium that has been formatted based on the FAT file system is divided into logical recording units called clusters each consisting of a predetermined number of sectors (e.g., 64 sectors). Each of the clusters has a cluster address assigned thereto. Data is written to, read from, or deleted from the information recording medium on a cluster-by-cluster basis.

That is, if the size of data to be recorded exceeds the capacity of one cluster, the data is divided and recorded in a plurality of clusters. On the other hand, if the size of data to be recorded does not exceed the capacity of one cluster, only a file of that data is recorded in one cluster, and other data is not recorded in the cluster even if the cluster has a remaining capacity.

In a predetermined recording area of the information recording medium, a file allocation table (hereinafter referred to as an FAT) that is referred to and updated when data is recorded or read, and a directory entry table are recorded.

The FAT includes spaces respectively associated with all the clusters of the information recording medium. Thus, as the capacity of the information recording medium becomes larger, the size of the FAT becomes larger. Each of the spaces of the FAT has an FAT address assigned thereto.

In a space with an FAT address of 0, information indicating whether a cluster with a cluster address CL0 is empty or used is recorded. As information indicating that the cluster is used, if data continued from data recorded in the cluster with the cluster address CL0 exits, a cluster address of a cluster where the continued data is recorded is recorded. If data continued from the data recorded in the cluster with the cluster address CL0 does not exist (that is, if data ends with the data recorded in the cluster with the cluster address CL0), an EOF (end of file) mark is recorded.

Similarly, in spaces with FAT addresses of 1, 2, 3, ..., information indicating whether clusters with cluster addresses CL1, CL2, CL3, ... are empty or used is recorded, respectively.

In the directory entry, for each data, a filename, an extension, attributes, reservation information, time of creation, date of creation, date of last access, date of update, a cluster address of a cluster where the beginning of the data is recorded (hereinafter referred to as a starting cluster address), and a data size are recorded.

The cluster address of a cluster where the FAT is recorded and the cluster address of a cluster where the directory entry is recorded are included in management information recorded in the first sector of the information recording medium. The management information also includes information indicating the capacity of the information recording medium and the number of sectors that constitutes one cluster.

The directory entry and the FAT will be described more specifically. Hereinafter, data recorded on an information recording medium will also be referred to as a file.

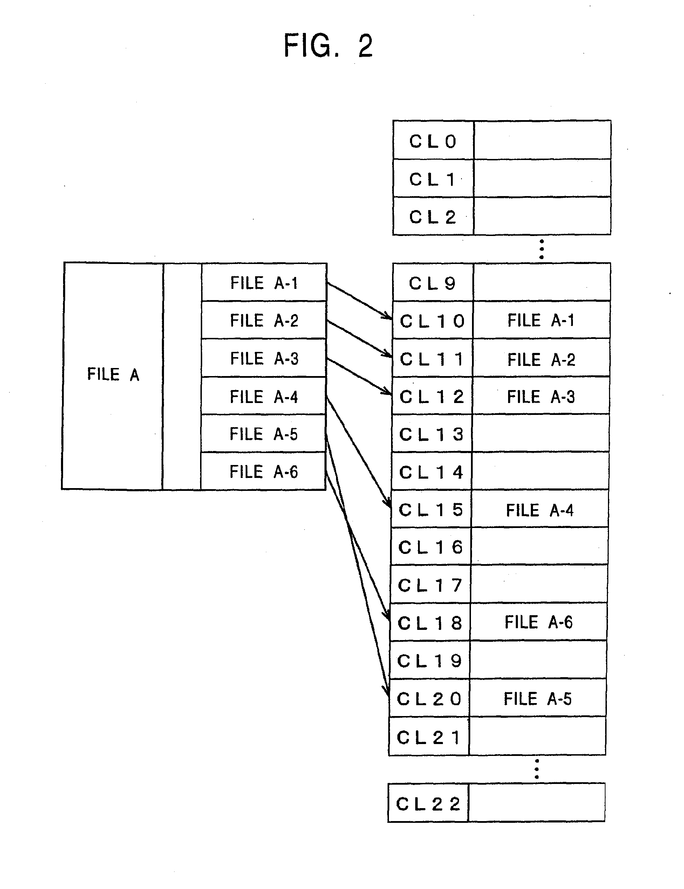

As an example, let it be supposed that, as shown in Fig. 2, a file A is divided into files A-1 to A-6, and the files A-1 to A-6 are recorded in clusters having cluster addresses CL10, CL11, CL12, CL15, CL20, and CL18, respectively.

In this case, the cluster address CL10 is recorded in the directory entry as the starting cluster address of the file A.

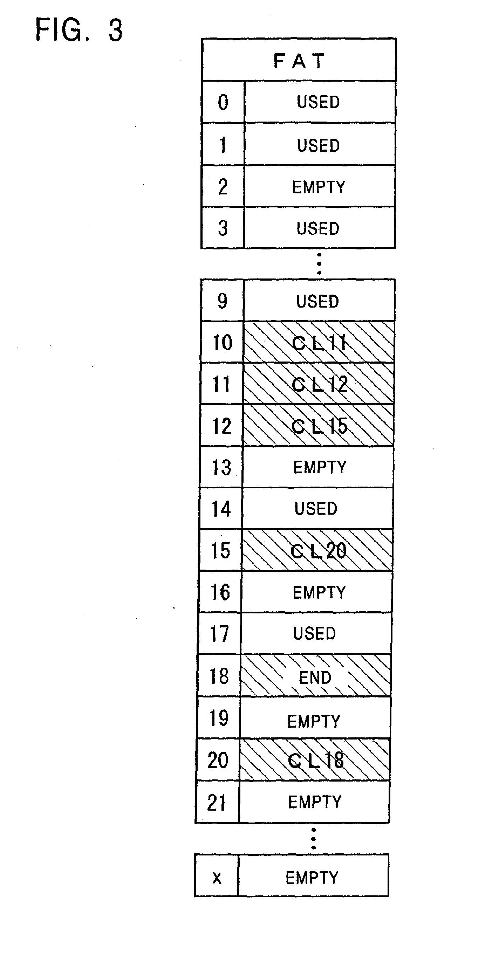

In the FAT, as shown in Fig. 3, the cluster address CL11 is recorded in a space with an FAT address of 10, the cluster address CL12 is recorded in a space with an FAT address of 11, the cluster address CL15 is recorded in a space with an FAT address of 12, the cluster address CL20 is recorded in a space with an FAT address of 15, the cluster address CL18 is recorded in a space with an FAT address of 20, and an EOF mark is recorded in a space with an FAT address of 18.

The FAT and the directory entry are updated in this manner each time a file is recorded on the information recording medium, and are used when a file is read.

Next, consideration will be directed to editing of an MPEG program stream or an MPEG video elementary stream (both hereinafter referred to as an MPEG stream) recorded on an information recording medium based on the FAT file system.

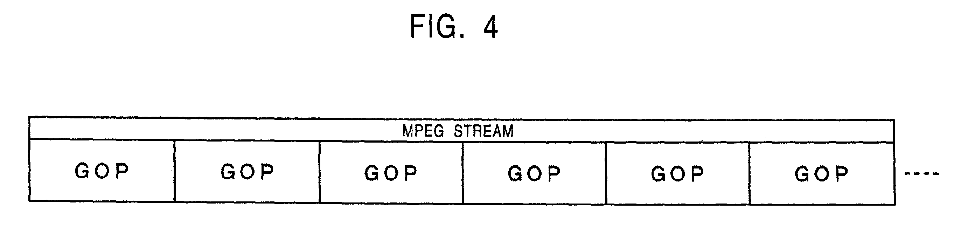

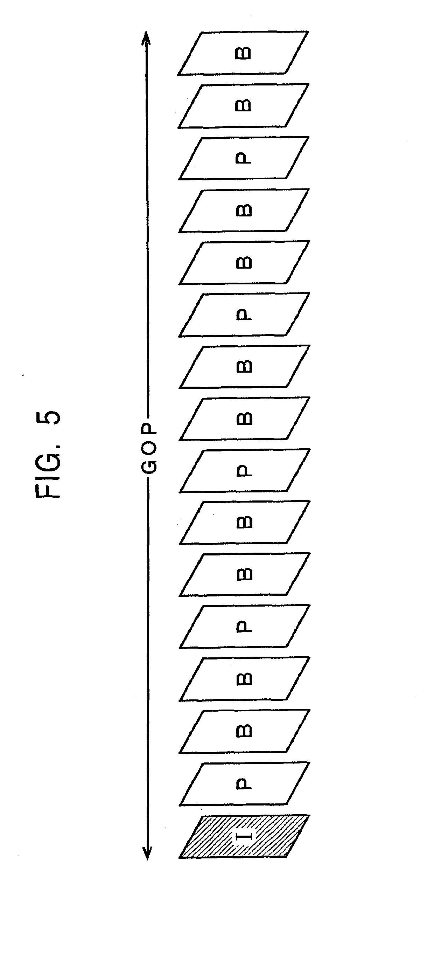

As shown in Fig. 4, data of an MPEG stream data is composed of a series of compression-encoded video signals called GOPs (group of pictures). In the case of NTSC (National Television System Committee) encoding, a GOP is usually composed of about fifteen frames. As shown in Fig. 5, the fifteen frames include at least one intraframe encoded I picture at the beginning, and the other frames are composed of P pictures that are interframe encoded by forward prediction and B pictures that are interframe encoded by bidirectional prediction.

The data amount of each GOP depends on the content of frames constituting the GOP, so that the data amount usually differs among GOPs. However, it is possible to encode video signals so that the amount of data generated will be a predetermined amount.

An I picture, which is intraframe encoded, allows an image to be restored only with its own data. On the other hand, P pictures and B pictures, which are predictively encoded, do not allow images to be restored without using an I picture in the same GOP.

Thus, for example, when video data of an MPEG stream is edited to delete part of the MPEG stream, if an I picture is deleted, P pictures and B pictures subsequent to the I picture cannot be restored. Therefore, the simplest way of deletion is to delete data by the unit of GOP.

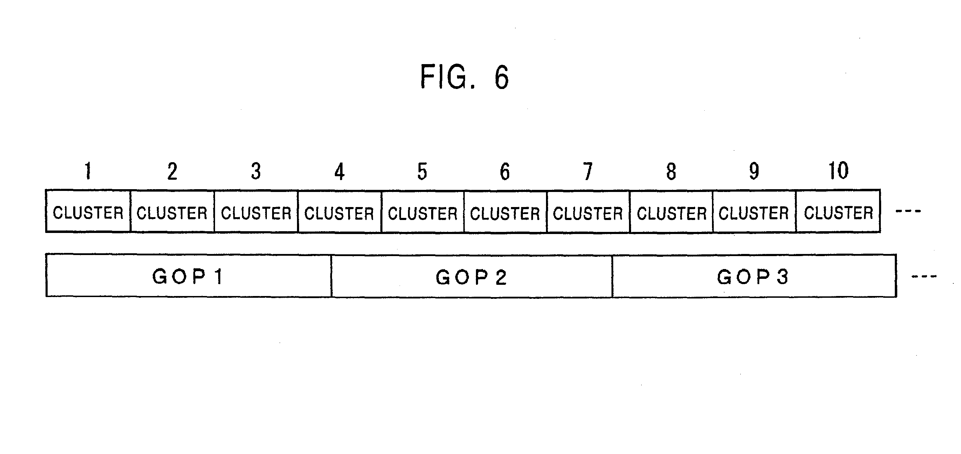

Fig. 6 shows an MPEG stream recorded on an information recording medium by a conventional recording apparatus. It is to be noted that the cluster addresses of clusters 1, 2, 3, ... are not necessarily sequential. Since the data amounts of GOPs are not usually the same, GOP boundaries rarely coincide with cluster boundaries.

Now, a case will be considered where GOP1 is deleted from the state shown in Fig. 6 in accordance with editing of video data. In this case, data in clusters 1 to 3 of the information recording medium is deleted, so that clusters 1 to 3 become empty clusters from the perspective of FAT management.

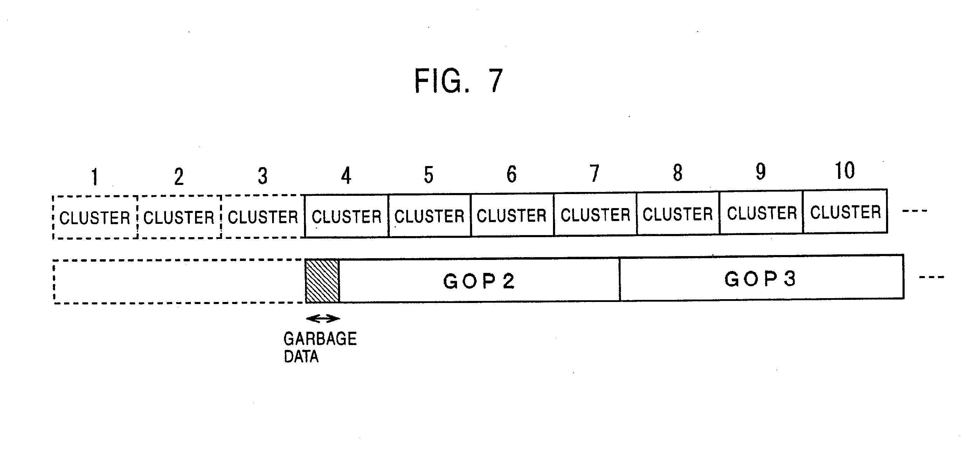

However, as shown in Fig. 7, data of an end portion of GOP1 (data of a P picture or B picture that cannot be restored due to the absence of an I picture) remains as garbage data at a beginning portion of cluster 4 of the information recording medium.

Thus, when the edited data is played back, for example, when data recorded in cluster 4 is read to play back GOP2, the garbage data cannot be recognized as garbage data depending on software that decodes the data, resulting in an incorrect operation.

Various respective aspects and features of the invention are defined in the appended claims. Features from the dependent claims may be combined with features of the independent claims as appropriate and not merely as explicitly set out in the claims.

Embodiments of the present invention relate to, for example, a recording apparatus and method, a recording medium, and a program that are suitable for use in recording streaming data such as an MPEG (Moving Picture Experts Group) program stream or an MPEG video elementary stream on an information recording medium.

The present invention has been made in view of the situation described above, and embodiments thereof can allow an MPEG stream to be recorded with GOP boundaries coinciding with cluster boundaries so that garbage data will not arise even if the MPEG stream is deleted by the unit of GOP.

The present invention, in an aspect thereof, provides a first recording apparatus for recording streaming data on an information recording medium, the recording apparatus including a detecting unit for detecting a boundary between data sets that successively constitute the streaming data; and accumulating unit for accumulating the streaming data; and a recording unit for recording the streaming data accumulated in the accumulating unit in a unit recording area of the information recording medium when the amount of the streaming data accumulated in the accumulating unit has reached a capacity of the unit recording area of the information recording medium, and, when the boundary of the data sets is detected by the detecting unit, regardless of the amount of the streaming data accumulated in the accumulating unit, adding padding data subsequently to the streaming data accumulated in the accumulating unit until the total amount of data reaches the capacity of the unit recording area of the information recording medium, and recording resulting data in the unit recording area of the information recording medium.

The streaming data may be an MPEG stream and the data sets may be groups of pictures.

The unit recording area of the information recording medium may be a cluster.

The present invention, in another aspect thereof, provides a first recording method for a recording apparatus for recording streaming data on an information recording medium, the recording method including a detecting step of detecting a boundary between data sets that successively constitute the streaming data; an accumulating step of accumulating the streaming data; and a recording step of recording the streaming data accumulated in the accumulating step in a unit recording area of the information recording medium when the amount of the streaming data accumulated in the accumulating step has reached a capacity of the unit recording area of the information recording medium, and, when the boundary of the data sets is detected in the detecting step, regardless of the amount of the streaming data accumulated in the accumulating step, adding padding data subsequently to the streaming data accumulated in the accumulating step until the total amount of data reaches the capacity of the unit recording area of the information recording medium, and recording resulting data in the unit recording area of the information recording medium.

The present invention, in another aspect thereof, provides a first recording medium having recorded thereon a computer-readable program for a recording apparatus for recording streaming data on an information recording medium, the program including a detecting step of detecting a boundary between data sets that successively constitute the streaming data; an accumulating step of accumulating the streaming data; and a recording step of recording the streaming data accumulated in the accumulating step in a unit recording area of the information recording medium when the amount of the streaming data accumulated in the accumulating step has reached a capacity of the unit recording area of the information recording medium, and, when the boundary of the data sets is detected in the detecting step, regardless of the amount of the streaming data accumulated in the accumulating step, adding padding data subsequently to the streaming data accumulated in the accumulating step until the total amount of data reaches the capacity of the unit recording area of the information recording medium, and recording resulting data in the unit recording area of the information recording medium.

The present invention, in another aspect thereof, provides a first program for allowing a computer that controls a recording apparatus for recording streaming data on an information recording medium to execute processing including a detecting step of detecting a boundary between data sets that successively constitute the streaming data; an accumulating step of accumulating the streaming data; and a recording step of recording the streaming data accumulated in the accumulating step in a unit recording area of the information recording medium when the amount of the streaming data accumulated in the accumulating step has reached a capacity of the unit recording area of the information recording medium, and, when the boundary of the data sets is detected in the detecting step, regardless of the amount of the streaming data accumulated in the accumulating step, adding padding data subsequently to the streaming data accumulated in the accumulating step until the total amount of data reaches the capacity of the unit recording area of the information recording medium, and recording resulting data in the unit recording area of the information recording medium.

The present invention, in another aspect thereof, provides a second recording apparatus for recording streaming data on an information recording medium, the recording medium including a generating unit for generating the streaming data by encoding an information signal based on a predetermined encoding scheme so that the data amount of data sets that successively constitute the streaming data will be an integer multiple of a capacity of a unit recording area of the information recording medium; and a recording unit for recording the streaming data generated by the generating unit on the information recording medium.

The information signal may be a video signal, the streaming data may be an MPEG stream, and the data sets may be groups of pictures.

The unit recording area of the information recording medium may be a cluster.

The present invention, in another aspect thereof, provides a second recording method for a recording apparatus for recording streaming data on an information recording medium, the recording method including a generating step of generating the streaming data by encoding an information signal based on a predetermined encoding scheme so that the data amount of data sets that successively constitute the streaming data will be an integer multiple of a capacity of a unit recording area of the information recording medium; and a recording step of recording the streaming data generated in the generating step on the information recording medium.

The present invention, in another aspect thereof, provides a second recording medium having recorded thereon a computer-readable program for a recording apparatus for recording streaming data on an information recording medium, the program including a generating step of generating the streaming data by encoding an information signal based on a predetermined encoding scheme so that the data amount of data sets that successively constitute the streaming data will be an integer multiple of a capacity of a unit recording area of the information recording medium; and a recording step of recording the streaming data generated in the generating step on the information recording medium.

The present invention, in another aspect thereof, provides a second program for allowing a computer that controls a recording apparatus for recording streaming data on an information recording medium to execute processing comprising a generating step of generating the streaming data by encoding an information signal based on a predetermined encoding scheme so that the data amount of data sets that successively constitute the streaming data will be an integer multiple of a capacity of a unit recording area of the information recording medium; and a recording step of recording the streaming data generated in the generating step on the information recording medium.

According to the first recording apparatus and method, recording medium, and program, streaming data is accumulated. The streaming data accumulated is recorded in the unit recording area of the information recording medium when the amount of the streaming data accumulated has reached the capacity of the unit recording area of the information recording medium. When the boundary of the data sets of the streaming data is detected, regardless of the amount of the streaming data accumulated, padding data is added subsequently to the streaming data accumulated until the total amount of data reaches the capacity of the unit recording area of the information recording medium, and the resulting data is recorded in the unit recording area of the information recording medium.

According to the second recording apparatus and method, recording medium, and program, streaming data is generated by encoding an information signal based on a predetermined encoding scheme so that the data amount of data sets that successively constitute the streaming data will be an integer multiple of a capacity of a unit recording area of the information recording medium, and the streaming data generated is recorded on the information recording medium.

The recording apparatus may be an independent apparatus, or a recording block of a recording/playback apparatus.

According to the present invention, an MPEG stream is recorded with the beginning of each GOP coinciding with a cluster boundary, so that garbage data does not arise even if the MPEG stream is deleted by the unit of GOP. Accordingly, an incorrect operation due to garbage data is prevented at a time of playback after the MPEG stream is deleted by the unit of GOP.

The invention will now be described by way of example with reference to the accompanying drawings, throughout which like parts are referred to by like references, and in which:
Fig. 1 is a diagram showing sectors that serve as physical recording units of an information recording medium and clusters that serve as logical recording units thereof;
Fig. 2 is a diagram showing a file divided and recorded in a plurality of clusters;
Fig. 3 is a diagram showing an example of an FAT corresponding to the state shown in Fig. 2;
Fig. 4 is a diagram showing an MPEG stream composed of a series of GOPs;
Fig. 5 is a diagram showing an example constitution of a GOP;
Fig. 6 is a diagram showing an example of GOPs recorded in clusters;
Fig. 7 is a diagram showing garbage data that arises when a GOP is deleted;
Fig. 8 is a block diagram showing an example construction of a video recording/playback apparatus according to an embodiment of the present invention;
Fig. 9 is a flowchart showing a process of adjusting the amount of GOP data by a buffer controller;
Fig. 10 is a diagram for explaining a result of the process of adjusting the amount of GOP data; and

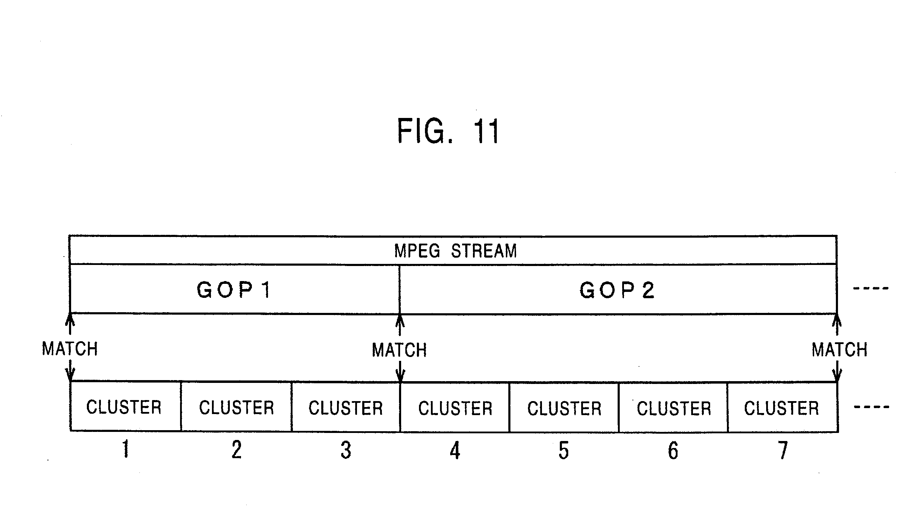

Fig. 11 is a diagram for explaining a result of controlling the number of bits generated by a video encoder/decoder 8.

Now, a video recording/playback apparatus according to an embodiment of the present invention will be described with reference to the accompanying drawings.

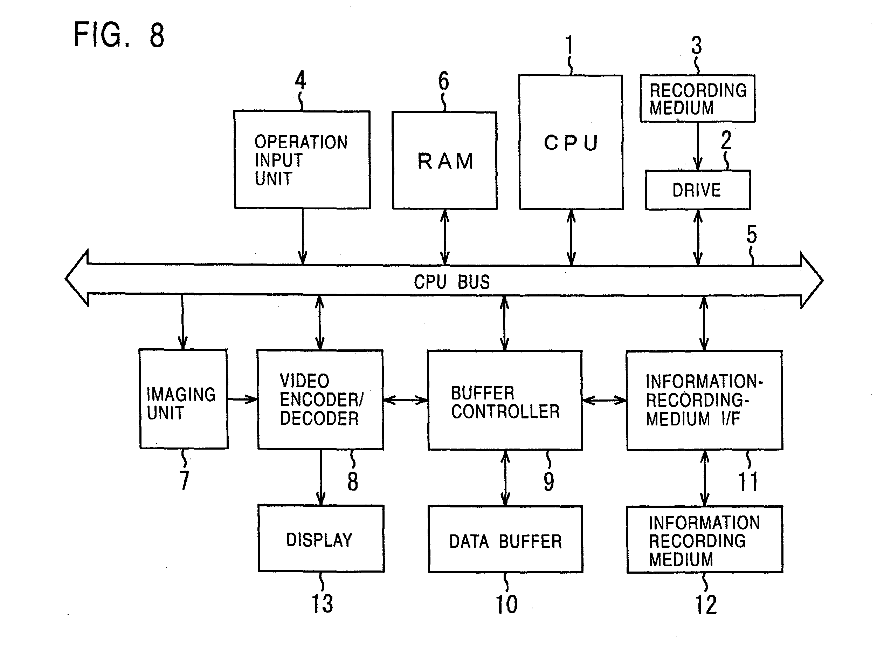

Fig. 8 shows an example construction of the video recording/playback apparatus. Referring to Fig. 8, a CPU 1 controls a drive 2 via a CPU bus 16. The CPU 1 reads a control program stored in a recording medium 3 such as a magnetic disk, an optical disk, a magneto-optical disk, or a semiconductor memory. The CPU 1 controls activation and deactivation of operations of components of the video recording/playback apparatus according to the program and based on information regarding user's operations, input from an operation input unit 4 via a CPU bus 5. In particular, the CPU 1 controls an information-recording-medium interface (I/F) 11 via the CPU bus 5 to control writing and reading of MPEG stream data or the like to and from an information recording medium 12.

The operation input unit 4 is a user interface including operation buttons and the like. The operation input unit 4 accepts operations by a user (e.g., an operation for requesting a start of recording, an operation for requesting an end of recording, an operation for requesting a start of playback, an operation for requesting an end of playback, etc.), and outputs corresponding operation information to the CPU 1 via the CPU bus 5.

To a volatile RAM 6, an FAT recorded on the information recording medium 12 is copied under the control of the CPU 1. The FAT copied to the RAM 6 is referred to by the CPU 1 to search for an empty cluster at a time of recording, and is updated in accordance with writing of data to the empty cluster. Then, the updated FAT is used to overwrite the FAT recorded in the information recording medium 12. The FAT copied to the RAM 6 is also referred to by the CPU 1 at a time of playback.

An imaging unit 7 includes a lens and a charge coupled device (CCD). The imaging unit 7 images an object, and sequentially outputs video signals acquired to a video encoder/decoder 8. At a time of recording, the encoder/decoder 8 encodes, based on MPEG, the video signals sequentially input from the imaging unit 7, and outputs a resulting MPEG stream to a buffer controller 9. Furthermore, the video encoder/decoder 8, each time when it outputs a GOP boundary in the MPEG stream, notifies the buffer controller 9 of that effect. Furthermore, in a playback process, the encoder/decoder 8 outputs, to a display 13, video signals obtained by decoding an MPEG stream fed from the buffer controller 9.

The buffer controller 9, at a time of recording, buffers the MPEG stream input from the video encoder/decoder 8 in a data buffer 10. The buffer controller 9 issues a write request to the CPU 1 each time an amount of MPEG stream data corresponding to one cluster has been buffered in the data buffer 10, and outputs the buffered data to the information-recording-medium I/F 11.

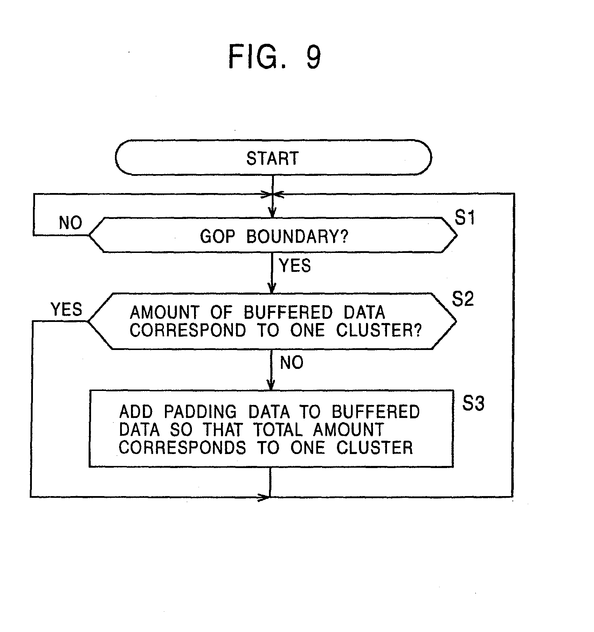

Furthermore, the buffer controller 9, in response to a notification that a GOP boundary has been output from the video encoder/decoder 8, executes a process of adjusting the amount of GOP data (which will be described later with reference to Fig. 9). Furthermore, at a time of playback, the buffer controller 9 buffers MPEG stream data read by the information-recording-medium I/F 11 from the information recording medium 12 in the data buffer 10, and supplies the buffered data in response to a request from the video encoder/decoder 8.

The information-recording-medium I/F 11, under the control of the CPU 1, reads a directory entry, an FAT, an MPEG stream, etc. recorded on the information recording medium 12. Also, the information-recording-medium I/F 11, under the control of the CPU 1, records MPEG stream data input from the buffer controller 9 at a cluster address specified by the CPU 1. Furthermore, the information-recording-medium I/F 11, under the control of the CPU 1, overwrites the FAT recorded on the information recording medium 12 with an FAT having been updated in the RAM 6.

The information recording medium 12 is a detachable and replaceable recording medium that has been formatted based on the FAT file system, such as a hard disk, a microdrive, or a semiconductor memory.

The display 13 displays an image corresponding to the video signals input from the video encoder/decoder 8.

Next, a process of adjusting the amount of GOP data by the buffer controller 9 will be described with reference to a flowchart shown in Fig. 9. The process of adjusting the amount of GOP data is executed in parallel with the ordinary process by the buffer controller 9 at a time of recording, described above (the process of issuing a write request to the CPU 1 each time an amount of MPEG stream data corresponding to one cluster has been buffered in the data buffer 10 and outputting the buffered data to the information-recording-medium I/F 11).

In step S1, the buffer controller 9 determines whether it has been notified of that a GOP boundary has been output by the video encoder/decoder 8, and waits until a notification to that effect is received. If it is determined that a notification to that effect has been received, the process proceeds to step S2.

In step S2, the buffer controller 9 determines whether the amount of MPEG stream data up to a GOP boundary, buffered in the data buffer 10, corresponds to one cluster. If it is determined that the amount of MPEG stream data up to the GOP boundary, buffered in the data buffer 10, does not correspond to one cluster, the process proceeds to step S3.

In step S3, the buffer controller 9 issues a write request to the CPU1, and adds padding data to the data up to the GOP boundary, buffered in the data buffer 10, so that the total data amount will correspond to one cluster, and outputs the result to the information-recording-medium I/F 11. The padding data is meaningless data as information defined by MPEG, and does not cause an incorrect operation at a time of playback.

If it is determined in step S2 that the amount of the MPEG stream data up to the GOP boundary, buffered in the data buffer 10, corresponds to one cluster, the ordinary recording process, described earlier, is executed, in which a write request is issued to the CPU 1 and the buffered data is output to the information-recording-medium I/F 11. Thus, in the process of adjusting the amount of GOP data, step S3 is skipped, the process returns to step S1, and the subsequent procedure is repeated. This concludes the description of the process of adjusting the amount of GOP data by the buffer controller 9.

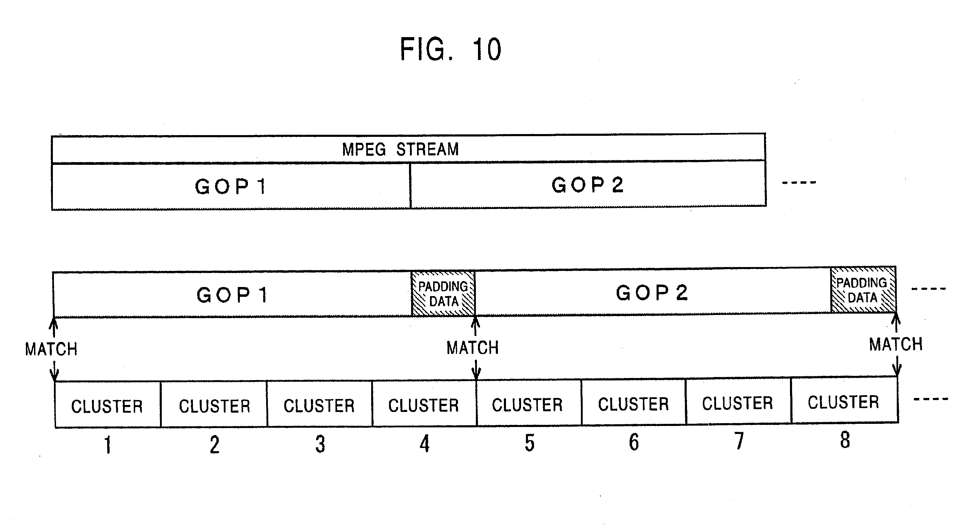

According to the process of adjusting the amount of GOP data, described above, to the MPEG stream output from the video encoder/decoder 8, shown in an upper part of Fig. 10, padding data is added by the buffer controller 9, as shown in a middle part of Fig. 10. Thus, each GOP is recorded with the beginning thereof coinciding with a cluster boundary.

When GOP1 is deleted by editing the MPEG stream recorded on the information recording medium 12 as described above, data in clusters 1 to 3 or clusters 1 to 4 of the information recording medium 12 is deleted. In either case, since the beginning of GOP2 coincides with the boundary between clusters 4 and 5, garbage data does not remain in cluster 5. Thus, an incorrect operation does not arise due to garbage data when GOP2 is played back.

The process of adjusting the amount of GOP data, described above, is applicable regardless of how the data amounts of GOPs in the MPEG stream output by the video encoder/decoder 8 vary.

Alternatively, instead of the process of adjusting the amount of GOP data by the buffer controller 9, the number of bits generated by the video encoder/decoder 8 may be controlled so that the data amount of each GOP constituting an MPEG stream becomes an integer multiple of the capacity of one cluster. In that case, advantageously, meaningless data such as padding data need not be recorded on the information recording medium 12.

Also in this case, each GOP is recorded with the beginning thereof coinciding with a cluster boundary. Thus, whichever GOP is deleted, garbage data does not remain in any cluster. Thus, an incorrect operation due to garbage data does not arise at a time of playback.

Since the information recording medium 12 having an MPEG stream recorded thereon by a video recording/playback apparatus according to the present invention is fully compliant with the ordinary FAT format, the information recording medium 12 can be accessed by, for example, a general-purpose personal computer,

The series of processes described above can be executed either by hardware or by software. When the series of processes is executed by software, a program constituting the software is installed on a computer (e.g., the CPU 1 shown in Fig. 8) embedded in special hardware, or on a general-purpose personal computer or the like that is capable of executing various programs with various programs installed thereon, from a recording medium (e.g., the recording medium 3 shown in Fig. 8).

The recording medium may be a package medium having the program recorded thereon, distributed for providing a program to a user separately from a computer, for example, a magnetic disc (including a flexible disc), an optical disc (including a CD-ROM (compact disc read-only memory) and a DVD (digital versatile disc)), a magneto-optical disc (including an MD (mini disc)), or a semiconductor memory. Alternatively, the recording medium may be a ROM or a hard disc having the program recorded thereon, distributed to a user as included in advance in a computer.

The steps of the program recorded on the recording medium need not necessarily be executed sequentially in the order described in this specification, and may be executed in parallel or individually.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A recording apparatus for recording streaming data on an information recording medium, the recording apparatus comprising:
detecting means for detecting a boundary between data sets that successively constitute the streaming data;
accumulating means for accumulating the streaming data; and
recording means for recording the streaming data accumulated in the accumulating means in a unit recording area of the information recording medium when the amount of the streaming data accumulated in the accumulating means has reached a capacity of the unit recording area of the information recording medium, and, when the boundary of the data sets is detected by the detecting means, regardless of the amount of the streaming data accumulated in the accumulating means, adding padding data subsequently to the streaming data accumulated in the accumulating means until the total amount of data reaches the capacity of the unit recording area of the information recording medium, and recording resulting data in the unit recording area of the information recording medium.

2. A recording apparatus according to Claim 1, wherein the streaming data is an MPEG stream and the data sets are groups of pictures.

3. A recording apparatus according to Claim 1, wherein the unit recording area of the information recording medium is a cluster.

4. A recording method for a recording apparatus for recording streaming data on an information recording medium, the recording method comprising:
a detecting step of detecting a boundary between data sets that successively constitute the streaming data;
an accumulating step of accumulating the streaming data; and
a recording step of recording the streaming data accumulated in the accumulating step in a unit recording area of the information recording medium when the amount of the streaming data accumulated in the accumulating step has reached a capacity of the unit recording area of the information recording medium, and, when the boundary of the data sets is detected in the detecting step, regardless of the amount of the streaming data accumulated in the accumulating step, adding padding data subsequently to the streaming data accumulated in the accumulating step until the total amount of data reaches the capacity of the unit recording area of the information recording medium, and recording resulting data in the unit recording area of the information recording medium.

5. A recording medium having recorded thereon a computer-readable program for a recording apparatus for recording streaming data on an information recording medium, the program comprising:
a detecting step of detecting a boundary between data sets that successively constitute the streaming data;
an accumulating step of accumulating the streaming data; and
a recording step of recording the streaming data accumulated in the accumulating step in a unit recording area of the information recording medium when the amount of the streaming data accumulated in the accumulating step has reached a capacity of the unit recording area of the information recording medium, and, when the boundary of the data sets is detected in the detecting step, regardless of the amount of the streaming data accumulated in the accumulating step, adding padding data subsequently to the streaming data accumulated in the accumulating step until the total amount of data reaches the capacity of the unit recording area of the information recording medium, and recording resulting data in the unit recording area of the information recording medium.

6. A program for allowing a computer that controls a recording apparatus for recording streaming data on an information recording medium to execute processing comprising:
a detecting step of detecting a boundary between data sets that successively constitute the streaming data;
an accumulating step of accumulating the streaming data; and
a recording step of recording the streaming data accumulated in the accumulating step in a unit recording area of the information recording medium when the amount of the streaming data accumulated in the accumulating step has reached a capacity of the unit recording area of the information recording medium, and, when the boundary of the data sets is detected in the detecting step, regardless of the amount of the streaming data accumulated in the accumulating step, adding padding data subsequently to the streaming data accumulated in the accumulating step until the total amount of data reaches the capacity of the unit recording area of the information recording medium, and recording resulting data in the unit recording area of the information recording medium.

7. A recording apparatus for recording streaming data on an information recording medium, the recording medium comprising:
generating means for generating the streaming data by encoding an information signal based on a predetermined encoding scheme so that the data amount of data sets that successively constitute the streaming data will be an integer multiple of a capacity of a unit recording area of the information recording medium; and
recording means for recording the streaming data generated by the generating means on the information recording medium.

8. A recording apparatus according to Claim 7, wherein the information signal is a video signal, the streaming data is an MPEG stream, and the data sets are groups of pictures.

9. A recording apparatus according to Claim 7, wherein the unit recording area of the information recording medium is a cluster.

10. A recording method for a recording apparatus for recording streaming data on an information recording medium, the recording method comprising:
a generating step of generating the streaming data by encoding an information signal based on a predetermined encoding scheme so that the data amount of data sets that successively constitute the streaming data will be an integer multiple of a capacity of a unit recording area of the information recording medium; and
a recording step of recording the streaming data generated in the generating step on the information recording medium.

11. A recording medium having recorded thereon a computer-readable program for a recording apparatus for recording streaming data on an information recording medium, the program comprising:
a generating step of generating the streaming data by encoding an information signal based on a predetermined encoding scheme so that the data amount of data sets that successively constitute the streaming data will be an integer multiple of a capacity of a unit recording area of the information recording medium; and
a recording step of recording the streaming data generated in the generating step on the information recording medium.

12. A program for allowing a computer that controls a recording apparatus for recording streaming data on an information recording medium to execute processing comprising:
a generating step of generating the streaming data by encoding an information signal based on a predetermined encoding scheme so that the data amount of data sets that successively constitute the streaming data will be an integer multiple of a capacity of a unit recording area of the information recording medium; and
a recording step of recording the streaming data generated in the generating step on the information recording medium.
